(19) Europäisches Patentamt / European Patent Office / Office européen des brevets

(11) **EP 3 491 462 B1**

(12) **FASCICULE DE BREVET EUROPEEN**

(45) Date de publication et mention de la délivrance du brevet:
**02.04.2025 Bulletin 2025/14**

(21) Numéro de dépôt: **17761014.4**

(22) Date de dépôt: **25.07.2017**

(51) Classification Internationale des Brevets (IPC):
**G02C 7/10** *(2006.01)*

(52) Classification Coopérative des Brevets (CPC):
**G02C 7/104**

(86) Numéro de dépôt international:
**PCT/EP2017/068765**

(87) Numéro de publication internationale:
**WO 2018/019833 (01.02.2018 Gazette 2018/05)**

(54) **LENTILLE OPHTALMOLOGIQUE, NOTAMMENT POUR LUNETTES DE SOLEIL**

BRILLENGLAS, INSBESONDERE FÜR EINE SONNENBRILLE

OPHTHALMIC LENS IN PARTICULAR FOR A PAIR OF SUNGLASSES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.07.2016 FR 1657182**

(43) Date de publication de la demande:
**05.06.2019 Bulletin 2019/23**

(73) Titulaire: **BNL Eurolens**
**01200 Montanges (FR)**

(72) Inventeur: **MARTINS, Sébastien**
**01200 Bellegarde-sur-Valserine (FR)**

(74) Mandataire: **Innovincia et al**
**11, avenue des Tilleuls**
**74200 Thonon-Les-Bains (FR)**

(56) Documents cités:
EP-A1- 1 580 591
WO-A1-2013/066493
US-A1- 2015 323 812
WO-A1-2008/067109
US-A1- 2008 221 674
US-B1- 6 612 697

**Description**

La présente invention concerne une lentille ophtalmologique notamment pour lunettes de soleil.

Le port de lunettes de soleil, notamment quand il règne une très forte luminosité, est médicalement recommandé pour préserver son potentiel de vision à long terme et aussi pour des raisons de sécurité par exemple lors de la conduite automobile.

En effet, les lunettes de soleil constituent une barrière contre les rayons UV (ultraviolets). De nombreuses études ont montré que les rayons UV peuvent engendrer des lésions, inflammations ou altérations de la cornée, du cristallin ou de la rétine. Afin d'éviter ces effets et surtout une modification de l'œil qui peut diminuer la vision à long terme, on incite de plus en plus les personnes de porter des lunettes de soleil pour éviter une exposition à une intensité lumineuse trop importante.

De plus, les lunettes de soleil permettent aussi de lutter contre l'éblouissement, ce qui augmente la sécurité lors de la conduite automobile ou des activités sportives, par exemple du ski ou d'autres activités potentiellement à risques.

C'est pourquoi des lunettes de soleil généralement vendues aujourd'hui bloquent tout rayonnement d'une longueur d'onde inférieure à 400nm.

Cependant, des études médicales des dernières années ont démontré qu'une plage de longueur d'onde autour de 430nm (+/- 20nm), connue aussi sous le nom de mauvais bleu ou « bad blue » en anglais, joue un rôle important par exemple dans la dégénérescence maculaire liée à l'âge (DMLA ou « AMD » en anglais). Il s'agit d'un processus qui est cumulatif au cours de la vie et qui devient gênant en particulier pour des personnes au-delà de 60 ans.

Pour remédier à ces problèmes, on connaît des lentilles ophtalmologiques avec les filtres plus prononcés dans la partie bleue visible du spectre entre 400nm et 480nm. Un exemple est celui divulgué dans le document US2008221674 A1.

Toutefois, ces lentilles ophtalmologiques connues ne donnent pas entière satisfaction dans la mesure où une partie du « bon bleu » entre 450nm et 480nm est également atténuée de façon importante ce qui nuit à la perception spectrale visuelle du porteur des lunettes de soleil. De plus, on constate une altération du contraste perçu par l'utilisateur ce qui peut être un inconvénient de sécurité, en particulier pour la conduite automobile.

Ce manque de contraste peut entraîner une fatigue visuelle importante du porteur de lunettes et se traduire aussi par un malaise, voire causer des maux de tête en cas extrême. La baisse du contraste peut aussi entraîner des difficultés d'appréciation de la perspective dans le champ de vision. Pour un conducteur de véhicule, il se peut qu'il apprécie mal la situation de trafic devant lui, ce qui peut représenter un certain danger pour le conducteur lui-même et pour les autres personnes présentes.

L'invention a donc pour objectif de proposer une lentille ophtalmologique améliorée permettant de résoudre au moins partiellement les inconvénients de l'art antérieur.

À cet effet, l'invention a pour objet une lentille ophtalmologique pour lunettes de soleil comportant au moins un substrat, au moins un des substrats comportant un ou plusieurs colorants et/ ou pigments, lesdits colorants et/ou pigments de tous les substrats coopérant ensemble afin d'absorber la lumière traversant la lentille, la lentille ayant un spectre de transmission tel que:

- la transmission aux longueurs d'ondes inférieures à 380nm est inférieure à 1%, en particulier 0,03%,

- le spectre comporte dans la gamme de longueurs d'ondes compris entre 390nm et 420nm un premier maximum de transmission présentant une transmission supérieure à 8%,

- le spectre comporte dans la gamme de longueurs d'ondes compris entre 426nm et 440nm un premier minimum de transmission présentant une transmission inférieure ou égale à 10%, en particulier inférieure ou égale à 6%, la transmission du premier minimum étant inférieure à la transmission du premier maximum,

- la transmission dans la gamme de longueur d'ondes compris entre 450nm et 500nm présente une transmission supérieure à 10%, le spectre comporte dans la gamme de longueurs d'ondes comprises entre 570nm et 595nm un deuxième minimum de transmission présentant une transmission inférieure à 10% de préférence inférieure à 6%,

- le spectre comporte dans la gamme de longueurs d'ondes comprises entre 590nm et 620nm un deuxième maximum de transmission présentant une transmission supérieure à 5% de préférence supérieure à 8%, la longueur d'onde correspondant au deuxième maximum de transmission étant supérieure à celle du deuxième minimum de transmission et la transmittance du deuxième maximum de transmission étant supérieure à celle du deuxième minimum de transmission,

- le spectre comporte dans la gamme de longueurs d'ondes comprises entre 620nm et 640nm un troisième minimum de transmission présentant une transmission inférieure à 15%, la transmittance du troisième minimum étant inférieure à la transmittance du deuxième maximum,

- la transmission aux longueurs d'ondes supérieures à 640nm est supérieure à 14%

La lentille ophtalmologique ainsi obtenue permet d'arrêter la lumière potentiellement dangereuse pour l'œil de l'utilisateur de la lentille ophtalmologique tout en accentuant les contrastes perçus.

La lentille ophtalmologique peut en outre présenter une ou plusieurs des caractéristiques suivantes, prises seules ou en combinaison.

Le spectre de la lentille ophtalmologique comporte dans la gamme de longueurs d'ondes comprise entre 480nm et 550nm un quatrième minimum de transmission présentant une transmission inférieure à 15 % particulier inférieure à 11% de préférence 9 %.

Le quatrième minimum de transmission est localisé entre 490nm et 510nm.

On coupe alors la lumière autour de la couleur turquoise / émeraude ce qui améliore le contraste entre les teintes bleues et les teintes vertes ou bien entre 520nm et 540nm ce qui permet d'améliorer la perception de toutes les autres couleurs autre que le vert car on coupe dans la couleur verte qui est la plage présentant pour l'œil la plus grande sensibilité.

Le spectre comporte dans la gamme de longueurs d'ondes comprises entre 440nm et 480nm un troisième maximum de transmission présentant une transmission supérieure à 15% de préférence 20%, en particulier 25%.

Ceci en conjonction avec le premier maximum permet de maintenir une bonne perception des teintes bleues malgré la coupure autour de 430nm.

La transmission du troisième minimum possède une valeur de transmission inférieure ou égale à 75%, en particulier 66%, de la valeur de transmission du deuxième maximum de transmission.

La transmission du deuxième minimum de transmission est inférieure à la transmission du troisième minimum de transmission.

La transmission du premier minimum de transmission est inférieure ou égale à la transmission du deuxième minimum de transmission.

La transmission du quatrième minimum de transmission est supérieure à la transmission du premier et du deuxième minimum de transmission.

Le spectre comporte entre le quatrième minimum de transmission et le deuxième minimum de transmission un quatrième maximum de transmission ayant une transmission comprise entre 10% et 60% notamment compris entre 10% et 25%.

La largeur du pic d'absorption formé par le premier minimum de transmission mesurée à une valeur de transmission correspondant au double de la valeur de transmission du premier minimum de transmission est comprise entre 10nm et 20nm, de préférence autour de 15nm.

La largeur du pic d'absorption formé par le deuxième minimum de transmission à une valeur de transmission correspondant au double de la valeur de transmission du deuxième minimum de transmission est comprise entre 15nm et 30nm, de préférence autour de 20nm.

Le deuxième minimum de transmission et le troisième minimum de transmission sont écartés de 30nm à 60nm, en particulier de 45nm.

La transmission entre 440nm et 480nm est supérieure à 20%.

La transmission entre 480nm et 510nm est comprise entre 10% et 40%

D'autres caractéristiques et avantages de l'invention apparaîtront plus clairement à la lecture de la description suivante, donnée à titre d'exemple illustratif et non limitatif, et des dessins annexés parmi lesquels :

- la figure 1 est une vue schématique en coupe transversale d'un exemple de réalisation d'une lentille ophtalmique 1 selon l'invention,

- les figures 2 à 5 montrent des exemples de spectres en transmission de lentilles selon l'invention, dont l'exemple de la figure 5 sans un ensemble polarisant.

On va maintenant décrire un exemple d'un mode de réalisation en référence aux figures.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations.

La transmittance spectrale ou transmission en % indique le rapport en pourcentage entre l'intensité lumineuse incidente et l'intensité lumineuse passant au travers un élément optique et qui n'est pas absorbée selon :

$$\tau = I(\lambda)/I_0(\lambda)*100$$

où

$\tau$ est la transmission ou transmittance spectrale,

$I_0(\lambda)$ est l'intensité lumineuse incidente à la longueur d'onde $\lambda$,

$I(\lambda)$ est l'intensité lumineuse reçue à la longueur d'onde $\lambda$ à après avoir traversé l'élément optique .

Par l'expression « inclus », on entend que le ou les bords est /sont également compris dans la consigne. Par exemple pour une longueur entre « 425 nm et 445 nm inclus », on comprend qu'il s'agit d'une plage de longueur d'onde qui comprend les bords de la plage de longueur d'onde ainsi définis ([425nm, 445nm]). Ainsi, on définit une plage allant d'une longueur d'onde supérieure ou égale à 425nm jusqu'à inférieure ou égale à 445nm. De manière générale, dans la présente description, sauf si cela est expressément mentionné, une plage de longueurs d'onde ou de largeur de pic est considéré avec les bords inclus.

Dans le présent exposé, on utilise par exemple les termes premier, deuxième, troisième et quatrième maximum ou minium. Il s'agit de simples dénominations et l'ordre n'a aucune valeur en termes de localisation en longueur d'onde, en importance de transmission ou de largeur de pic.

Dans le présent exposé, les mots transmission et transmittance sont utilisés comme synonymes ayant la même signification.

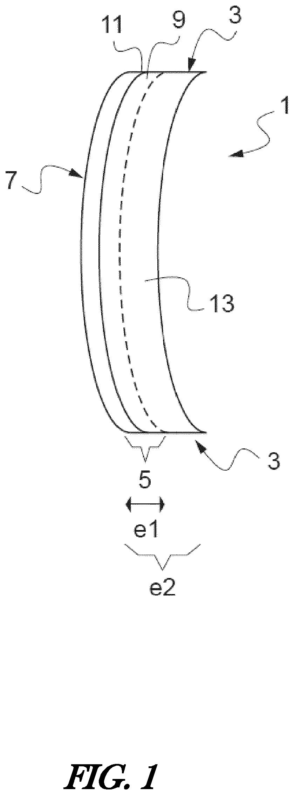

La lentille ophtalmique 1 de la figure 1 est teintée et par exemple destinée à être utilisée pour des lunettes, en particulier des lunettes de soleil. Pour ce faire il est seulement nécessaire de façonner le bord externe 3 selon la forme voulue du cadre de la monture.

Par lentille ophtalmique on entend une lentille correctrice ou non, finie ou semi-finie, apte à être montée dans une monture, par exemple une monture de lunettes, un masque ou une visière destinée à être placée devant les yeux et formant un écran de protection visuel.

La lentille ophtalmique peut être en verre minéral ou en verre organique ou une combinaison des deux.

La lentille ophtalmique peut présenter un gradient de teinte, et elle peut comprendre d'autres fonctions solaires comme une fonction polarisante, photochromique seule ou en combinaison. La lentille ophtalmique est par exemple de classe 2, 3 ou 4, de préférence 2 ou 3 selon la norme ISO 12312.

Elle peut également comprendre d'autres fonctions supplémentaires, seules ou en combinaison parmi la liste non exhaustive suivante : antichoc, anti-rayures, anti-abrasion, anti-reflet, miroir, anti-salissures, anti-buée, anti-statique. Ces fonctions supplémentaires peuvent être réalisées selon des méthodes classiques (trempage, dépôt sous vide, dépôt à la tournette (« spin coating »), dépôt par pulvérisation (« spray coating ») ...).

La lentille ophtalmique teintée 1 montrée en figure 1 comprend un ensemble polarisant 5 composé d'au moins d'une première 7 et d'une seconde 9 couches d'un matériau thermoplastique ou thermodurcissable prenant en sandwich un film polarisant 11. Bien entendu, cet ensemble polarisant 5 avec ses couches 5, 7 et 9 est optiquement transparent, c'est-à-dire qu'il laisse passer de la lumière.

Selon une variante non représentée, une lentille ophtalmique peut ne pas comprendre un ensemble polarisant 5.

Comme on le voit sur la figure 1, la lentille ophtalmique 1 comporte en outre au moins une troisième couche formant substrat 13 d'un matériau thermoplastique, par exemple en polycarbonate, transparent teinté ou coloré adhérant par injection à la seconde couche 9.

Selon une variante la lentille ophtalmologique comporte plusieurs substrats ou couches comportant chacun un ou plusieurs colorants. Les colorants de tous les substrats coopèrent ensemble afin d'absorber la lumière traversant la lentille 1 pour obtenir un spectre de transmission comme cela sera décrit plus loin.

A titre d'exemple, l'ensemble polarisant 5 possède une épaisseur e1 comprise entre 0,3 et 1mm et la troisième couche formant substrat 13 possède une épaisseur e2 comprise entre 0,5 et 2mm.

Le film polarisant est par exemple un film de polyvinyle alcool (PVA) connu pour ses propriétés polarisantes.

Pour une utilisation lunettes, la couche 13 sera celle destinée à être la plus proche de l'œil de l'utilisateur et la couche 7 celle la plus éloignée de l'œil de l'utilisateur.

Selon une variante non représentée, pour réaliser un verre semi-fini, une couche thermoplastique cristal peut être disposée contre la couche 13 pour être façonnée pour un utilisateur final afin d'adapter la lentille ophtalmique à la vue de celui-ci. Dans ce cas, c'est cette couche cristal destinée à être la plus proche de l'œil de l'utilisateur.

Comme évoquée ci-dessus, les deux couches 7, 9 peuvent être réalisées par un matériau thermoplastique ou thermodurcissable, et la couche 13 peut être réalisée en un matériau thermoplastique.

Plus généralement, le ou les matériaux de certaines couches de la lentille ophtalmique 1 peuvent être en n'importe quel matériau couramment utilisé dans le domaine de l'optique et en particulier dans le domaine ophtalmique.

Comme matériau thermoplastique, on peut par exemple choisir dans le groupe non exhaustif suivant : polymethyl(meth)acrylate, polycarbonate, polycarbonate/polyester mélangés, polyamide, polyester, cyclic olefin copolymers, polyuréthane, polysulfone, du TAC (triacétate de cellulose), polyimide, polyuréthanes ; poly (téréphtalate d'éthylène) et le polyméthacrylate de méthyle (PMMA) et copolymères et leur combinaison.

Comme matériau thermodurcissable, on peut par exemple choisir dans le groupe non exhaustif suivant du CAB (cellulose acétate butyrate), les copolymères éthylène/norbor-nène ou éthylène/cyclopentadiène ; (homo et copolymères de carbonates allylique de polyols aliphatiques ou aromatiques linéaires ou ramifiés, comme les homopolymères de diéthylène glycol bis(carbonate d'allyl) (CR 39®) ; (homo et copolymères d'acide methacrylique et les esters, qui peuvent être dérivés de bisphénol A ; (polymères et copolymères de l'acide thiomethacrylique et esters, (polymères et copolymères d'uréthane et de thiouréthane), ( polymères et copolymères d'epoxy), (polymères et copolymères de sulfures et d'épisulfures) et leurs combinaisons.

Pour colorer le matériau thermoplastique, il est possible d'ajouter des pigments ou des colorants. Concernant les pigments, ceux-ci peuvent être des pigments organiques ou minéraux.

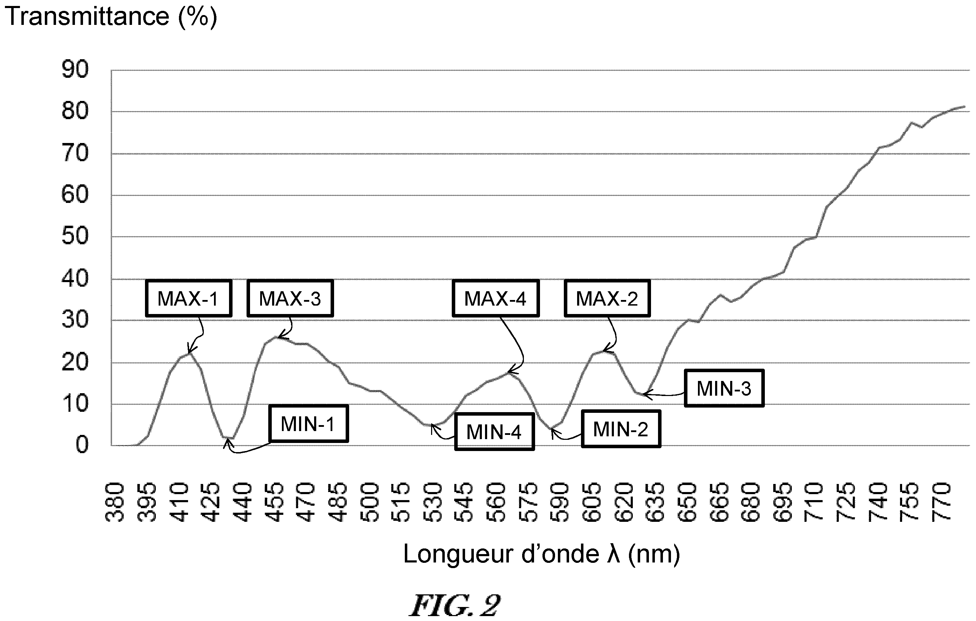

Dans le présent cas, le substrat formé par la couche 13 comporte plusieurs colorants et/ou pigments qui coopèrent ensemble afin d'absorber la lumière traversant la lentille, la lentille ayant un spectre de transmission tel qu'on le voit par exemple sur la figure 2 montrant un spectre en transmission d'un exemple de lentille ophtalmologique selon l'invention.

Les colorants ou pigments peuvent cependant être ajoutés à d'autres composants de la lentille 1, par exemple les autres couches 7, 9, 11 de sorte que leur superposition présente globalement le spectre recherché.

Dans le présent exposé, le terme substrat doit être compris au sens large et comprend tout matériau optiquement transparent dans lequel on peut incorporer un pigment ou un colorant.

En figure 2 est représentée la transmittance, ou transmission, en pourcentage de lumière traversant la lentille 1 en fonction de la longueur d'onde λ (lambda). L'axe des abscisses est gradué en nanomètres (nm), sur une gamme de 380nm à 780nm, ce qui correspond à peu près à la gamme spectrale visible pour l'être humain.

Sur la figure 2, on voit que le spectre comporte, dans la gamme de longueurs d'ondes inférieure à environ 380 à 390nm une transmission très basse inférieure à 1%, en particulier une valeur inférieure à 0,03 %. Cette propriété permet d'assurer que la transmission de la lumière inférieure à 380nm (UV) qui peut endommager la rétine, est minimale.

On peut donc observer que la transmission à des longueurs d'ondes à 400nm est coupée. Par là on entend que la transmission ou transmittance est donc inférieure à 1%.

De 390nm à 420nm le spectre présente un premier pic de transmission MAX-1 présentant une transmittance allant jusqu'à plus de 20 %, ici précisément 22,15 % à 415nm. Ce premier pic de transmission présente à titre d'exemple une largeur à mi-hauteur de 25nm.

De façon plus générale, la transmission du premier pic de transmission MAX-1 peut être supérieure ou égal à 8% dans la plage de longueur d'onde comprise entre 390nm à 420nm, ce qui permet de conserver une bonne perception des couleurs bleues-violettes correspondant à cette gamme spectrale. La valeur maximale du premier pic de transmission MAX-1 est inférieure à 70%, en particulier inférieure à 50%.

La lentille ophtalmique 1 peut appartenir à la classe 2, notamment à la classe 3 selon la norme ISO12312.

Le spectre de transmission comporte ensuite un premier minimum de transmission MIN-1 compris entre 426nm et 440nm présentant une transmission inférieure ou égale à 10%, en particulier inférieure ou égale à 6%, la transmission du premier minimum (MIN-1) étant inférieure à la transmission du premier maximum (MAX-1).

Dans le présent exemple, ce premier minimum MIN-1 est en figure 2 localisé autour de 435nm, et présente une transmission de 1,84 %.

La largeur du premier minimum MIN-1 mesurée au double de sa valeur minimale de 2% est de 10nm environ. C'est à dire que pour un minimum descendant ici à 2 %, on observe l'écart spectral entre les points de la courbe où la transmission est à 2 x 1,84 % = 3,68 % à gauche et à droite du minimum (ici respectivement 427nm et 437nm en figure 2).

Ce premier minimum MIN-1 permet d'écarter la composante spectrale bleue néfaste à long terme connue sous le nom de "bad blue" ou mauvais bleu qui joue un rôle important par exemple dans la dégénérescence maculaire liée à l'âge (DMLA ou « AMD » en anglais).

Le pic d'absorption formé par le premier minimum de transmission MIN-1 peut de manière générale avoir une largeur spectrale au double de sa valeur de transmission minimale d'environ 10 à 20nm, de préférence environ 15nm.

Ensuite la transmission s'élève pour atteindre entre 450nm et 500nm un niveau la transmission supérieure à 10 % pour permettre une bonne perception des couleurs bleues dans cette gamme de longueur d'onde. Entre 450nm et 500nm, la transmission ou transmittance est inférieure à 70%, en particulier inférieure à 50%.

On observe de plus que le spectre comporte dans la gamme de longueurs d'ondes comprise entre 570nm et 595nm un deuxième minimum MIN-2 présentant une transmission inférieure à 10%, notamment inférieure à 6%. Dans le cas de la figure 2, le minimum est situé à 585nm avec une transmittance de 4,20 %.

Le pic d'absorption ainsi formé autour du deuxième minimum MIN-2 a une largeur au double de sa valeur minimale de 15nm environ.

De façon générale, le deuxième minimum MIN-2 possède une largeur spectrale mesurée au double de sa valeur de transmission minimale d'environ compris entre 15 à 30nm, de préférence environ 20nm.

Entre 590nm et 620nm, le spectre présente un deuxième maximum de transmission MAX-2 présentant une transmittance supérieure à 5% de préférence supérieure à 8%, la longueur d'onde correspondant au deuxième maximum de transmission MAX-2 étant supérieure à celle du deuxième minimum de transmission MIN-2 et la transmittance du deuxième maximum de transmission MAX-2 étant supérieure à celle du deuxième minimum de transmission MIN-2.

Dans le présent cas, le deuxième maximum est localisé à 610nm et possède une transmittance de 22,93 %. Ce deuxième maximum MAX-2 présente une largeur à mi-hauteur d'environ 30nm.

Entre 620nm et 640nm, le spectre présente un troisième minimum de transmission MIN-3 avec une transmission inférieure à 15%. La transmittance du troisième minimum MIN-3 est bien entendu inférieure à la transmittance du deuxième maximum MAX-2.

Plus précisément, le troisième minimum est localisé à environ 630nm et présente une transmittance de 12,12 %, et possède une largeur au double de la valeur minimale d'environ 15nm.

Par ailleurs, la transmission du troisième minimum MIN-3 est inférieure à 75%, en particulier 66%, de la valeur de transmission du deuxième maximum de transmission MAX-2, c'est-à-dire la valeur de transmission du troisième minimum MIN-3 est inférieure à 3/4 , en particulier 2/3 de valeur de transmission du deuxième maximum MAX-2.

Dans le cas présent, étant donné que la valeur de transmission du troisième minimum est de 12,12% et la valeur de transmission du deuxième maximum est de 22.93%, la valeur de transmission du troisième minimum MIN-3 est même seulement 53% de la valeur de transmission du deuxième maximum MAX-2.

En outre, la valeur de transmission du premier minimum MIN-1 est inférieure ou égale à la valeur de transmission du deuxième minimum MIN-2, respectivement 1,84 % et 4,20 % dans le cas de la figure 2.

La valeur de transmission du deuxième minimum MIN-2 est inférieure ou égale à la valeur de transmission du troisième minimum MIN-3 environ 4,20 % et 12,12% respectivement sur la figure 2.

Le deuxième minimum de transmission MIN-2 et le troisième minimum de transmission MIN-3 sont avantageusement écartés d'environ 30nm à 60nm, en particulier de 45nm.

En particulier, dans le cas de la figure 2, le deuxième minimum MIN-2 est situé vers 585nm et le troisième minimum MIN-3 est localisé à 630nm, ils sont donc écartés de 45nm.

Pour les longueurs d'onde au-delà de 640nm, la transmission augmente avec la longueur d'onde et est choisie de sorte qu'elle est supérieure à 14% pour les longueurs d'ondes supérieures à 640nm.

Dans le cas de la figure 2, la transmission à 640nm est même 24 % pour atteindre 50% à entre 705nm et 710nm puis environ 75% et plus à partir de 750nm.

Le mode de réalisation de la figure 2 comporte également un quatrième minimum de transmission MIN-4, localisé de manière générale entre 480nm et 550nm, préférentiellement entre 490nm et 510nm ou bien entre 520nm et 540nm avec une transmission inférieure à 15 % en particulier inférieure à 11 de préférence inférieure à 9%.

Sur la figure 2, ce quatrième minimum de transmission MIN-4 présente une transmission de 4,85 % à 530nm.

Entre 480nm et 510nm, la transmission est comprise de façon générale dans le cas de la figure 2 entre 10 et 21%.

La valeur de transmission du quatrième minimum MIN-4 est de manière générale plus haute que la valeur minimale de transmission des premier et deuxième minima MIN-1, MIN-2. En effet, sur la figure 2 la valeur de transmission du quatrième minimum MIN-4 est de 4,85 % à 530nm, celles des premier et deuxième minima MIN-1, MIN-2 sont respectivement 2,21 % à 430nm et 4,20 % à 585nm.

Dans le mode de réalisation de la figure 2, le spectre comporte en outre un troisième maximum de transmission MAX-3, ayant de façon générale une valeur maximale transmission supérieure à 15% de préférence 20%, en particulier 25% et localisé dans la plage de longueur d'onde entre 440nm et 480nm.

Dans le présent cas le troisième maximum MAX-3 est localisé à 455nm avec une transmission de 26,09%.

Le domaine spectral situé entre 500 et 600nm environ (couleur verte à jaune) correspond à un maximum de perception de l'œil humain. Dans ce domaine spectral, les contrastes sont généralement assez bien perçus. Une transmission comprise entre 10 et 20 %, plus généralement entre 5 et 50 %, correspondant à l'atténuation simple de luminosité générale dans le cadre de lunettes de soleil, peut être utilisée.

L'invention prévoit dans un mode de réalisation que le spectre comporte, en complément ou en alternative au quatrième minimum MIN-4 un quatrième maximum MAX-4, localisé entre le quatrième minimum MIN-4 et le deuxième minimum MIN-2. Ce quatrième maximum MAX-4 comporte ainsi une valeur de transmission supérieure à la valeur de transmission des deuxième MIN-2 et quatrième minimum MIN-4.

De façon générale, la transmittance du quatrième minimum MIN-4 est inférieure à celle du troisième maximum MAX-3 et à celle du quatrième maximum MAX-4.

De fait, dans la plage de longueurs d'onde comprises entre 400nm et 500nm, la transmittance est supérieure à la transmittance du premier minimum MIN-1.

La transmission du quatrième maximum MAX-4 est de façon générale comprise entre 10% et 60% notamment compris entre 10% et 25%.

De façon générale, la transmittance du quatrième maximum MAX-4 est supérieure à celle du deuxième minimum MIN-2 et à celle du quatrième minimum MIN-4.

Dans le présent exemple de la figure 2, le quatrième maximum MAX-4 est localisé à 565nm avec une transmission de 18%.

Pour ce mode de réalisation, le quatrième maximum présente une largeur à mi-hauteur de 40nm environ, plus importante que les trois autres maxima de la figure 2. Ce pic est plus étalé que les autres maxima MAX-1, MAX-2 et MAX-3.

Une lentille 1 dont en particulier d'un substrat 13 transparent teinté ou coloré présentant un spectre selon la figure 2 permet une meilleure perception des couleurs, et donc des volumes, tout en écartant les composantes spectrales pouvant être néfastes pour l'utilisateur. Cette amélioration des contrastes permet notamment d'améliorer la sécurité de l'utilisateur lorsqu'il conduit un véhicule ou pratique un sport d'hiver sur de la neige dans des conditions d'ensoleillement potentiellement éblouissantes.

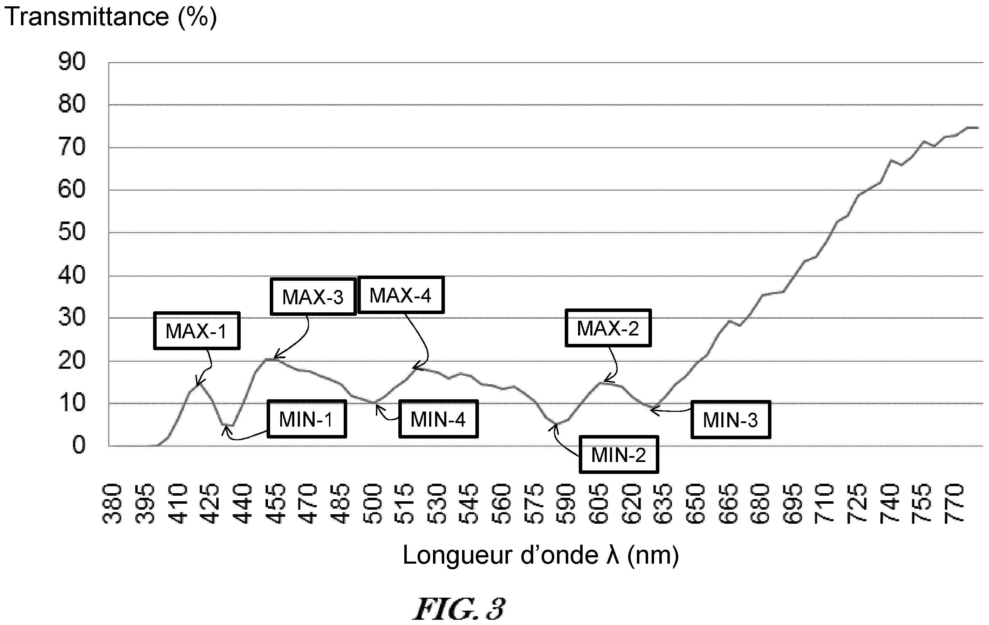

Les figures 3, 4 et 5 représentent trois autres modes de réalisation de spectres de transmission pour une lentille ophtalmique 1 selon l'invention. Ces trois spectres de transmission présentent les mêmes caractéristiques générales que le spectre de la figure 2.

Ces spectres des figures 3, 4, et 5 permettent d'une part de modifier la teinte perçue de la lentille 1 par un utilisateur et d'autre part d'accentuer en transmission certaines plages de longueur d'onde en transmission. On peut ainsi obtenir des lunettes atténuant différemment la luminosité perçue, par exemple en intensité pour des lunettes plus ou moins sombres.

Plus spécifiquement, pour le spectre de la figure 3, le tableau suivant permet de localiser les divers maxima et minima dans l'ordre d'apparition en allant des longueurs d'ondes les plus courtes vers les longueurs d'ondes les plus longues :

| Extrema | Localisation en longueur d'onde (nm) | Valeur de transmission (%) | Largeur à mi-hauteur pour un maximum / larguer au double de sa hauteur pour un minimum (nm) |
|---|---|---|---|
| MAX-1 | 420 | 14,89 | 25 |
| MIN-1 | 435 | 4.98 | 15 |
| MAX-3 | 455 | 20,37 | - |
| MIN-4 | 500 | 10,15 | - |
| MAX-4 | 520 | 18,52 | - |
| MIN-2 | 585 | 5,20 | 20 |
| MAX-2 | 605 | 14,79 | 35 |
| MIN-3 | 630 | 9,07 | - |

Dans la gamme de longueurs d'ondes inférieure à 390nm, la transmission est inférieure à 0,03 %.

On coupe alors la lumière autour de la couleur turquoise / émeraude ce qui améliore le contraste entre les teintes bleues et les teintes vertes.

La transmission à 640nm est de 14.64 % pour atteindre 44,63% à 705nm puis environ 75% et plus à partir de 775 nm.

Dans le cas présent, étant donné que la valeur de transmission du troisième minimum MIN-3 est de 9,07% et la valeur de transmission du deuxième maximum est de 14,79%, la valeur de transmission du troisième minimum MIN-3 est à 62% de la valeur de transmission du deuxième maximum MAX-2.

En outre, la valeur de transmission du premier minimum MIN-1 est inférieure ou égale à la valeur de transmission du deuxième minimum MIN-2, respectivement 4,98 % et 5.20 % dans le cas de la figure 3.

Et la valeur de transmission du deuxième minimum MIN-2 est inférieure ou égale à la valeur de transmission du troisième minimum MIN-3 5,20% et 9,07% respectivement sur la figure 3.

Le deuxième minimum de transmission MIN-2 et le troisième minimum de transmission MIN-3 sont écartés d'environ 45nm.

En particulier, dans le cas de la figure 3, le deuxième minimum MIN-2 est situé vers 585nm et le troisième minimum MIN-3 est localisé à 630nm, ils sont donc écartés de 45nm.

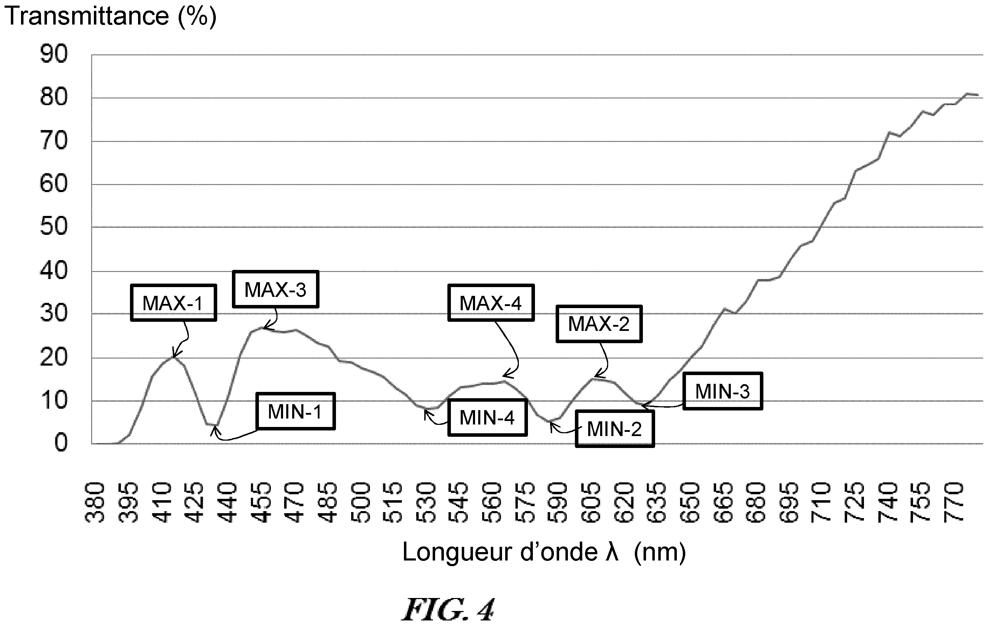

Concernant le spectre de la figure 4, le tableau suivant permet de localiser les divers maxima et minima dans l'ordre d'apparition en allant des longueurs d'ondes les plus courtes vers les longueurs d'ondes les plus longues :

| Extrema | Localisation en longueur d'onde (nm) | Valeur de transmission (%) | Largeur à mi-hauteur pour un maximum / larguer au double de sa hauteur pour un minimum (nm) |
|---------|---------|---------|---------|
| MAX-1 | 415 | 20,23 | 35 |
| MIN-1 | 435 | 4,46 | 20 |
| MAX-3 | 455 | 27,00 | - |
| MIN-4 | 530 | 8,27 | - |
| MAX-4 | 565 | 14,55 | - |
| MIN-2 | 585 | 5,18 | 20 |
| MAX-2 | 605-610 | 14,99 | 35 |
| MIN-3 | 630 | 9,11 | - |

Dans la gamme de longueurs d'ondes inférieure à 390nm, la transmission est inférieure à 0,03 %.

La transmission à 640nm est de 14.93 % pour atteindre environ 47% à 705nm puis environ 77% et plus à partir de 755 nm.

Dans le cas présent, étant donné que la valeur de transmission du troisième minimum MIN-3 est de 9,11% et la valeur de transmission du deuxième maximum est de 14,87%, la valeur de transmission du troisième minimum MIN-3 est à 61% de la valeur de transmission du deuxième maximum MAX-2.

En outre, la valeur de transmission du premier minimum MIN-1 est inférieure ou égale à la valeur de transmission du deuxième minimum MIN-2, respectivement 4,46 % et 5,18 % dans le cas de la figure 4.

Et la valeur de transmission du deuxième minimum MIN-2 est inférieure ou égale à la valeur de transmission du troisième minimum MIN-3 5,18% et 9,11% respectivement sur la figure 4.

Le deuxième minimum de transmission MIN-2 et le troisième minimum de transmission MIN-3 sont écartés d'environ 45nm.

En particulier, dans le cas de la figure 4, le deuxième minimum MIN-2 est situé vers 585nm et le troisième minimum MIN-3 est localisé à 630nm, ils sont donc écartés de 45nm.

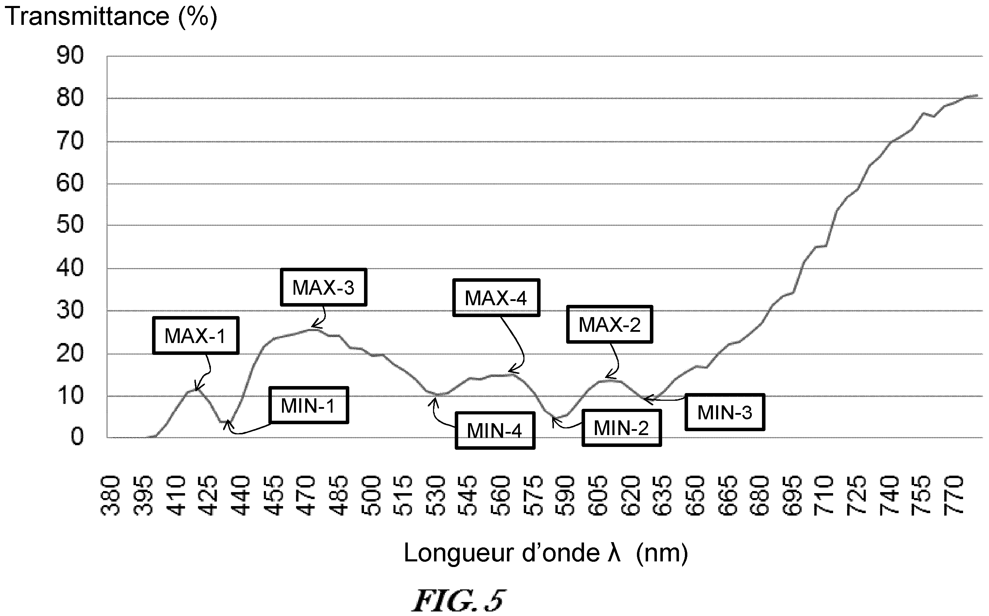

Concernant le spectre de la figure 5, le tableau suivant permet de localiser les divers maxima et minima dans l'ordre d'apparition en allant des longueurs d'ondes les plus courtes vers les longueurs d'ondes les plus longues :

| Extrema | Localisation en longueur d'onde (nm) | Valeur de transmission (%) | Largeur à mi-hauteur pour un maximum / larguer au double de sa hauteur pour un minimum (nm) |
|---------|---------|---------|---------|
| MAX-1 | 420 | 11,91 | 30 |
| MIN-1 | 435 | 3,73 | 15 |
| MAX-3 | 470 | 25,57 | - |
| MIN-4 | 530 | 10,51 | - |
| MAX-4 | 565 | 15,12 | - |
| MIN-2 | 585 | 4,60 | 20 |
| MAX-2 | 605-610 | 13,81 | 35 |
| MIN-3 | 630 | 9,09 | - |

Dans la gamme de longueurs d'ondes inférieure à 390nm, la transmission est inférieure à 0,03 %.

La transmission à 640nm est de 14,01 % pour atteindre 45,13% à 705nm puis environ 76% et plus à partir de 755 nm.

Dans le cas présent, étant donné que la valeur de transmission du troisième minimum MIN-3 est de 9,09% et la valeur de transmission du deuxième maximum est de 13,81%, la valeur de transmission du troisième minimum MIN-3 est à 66% de la valeur de transmission du deuxième maximum MAX-2.

En outre, la valeur de transmission du premier minimum MIN-1 est inférieure ou égale à la valeur de transmission du deuxième minimum MIN-2, respectivement 3,73 % et 4,60 % dans le cas de la figure 4.

Et la valeur de transmission du deuxième minimum MIN-2 est inférieure ou égale à la valeur de transmission du troisième minimum MIN-3 4,60% et 9,09% respectivement sur la figure 5.

Le deuxième minimum de transmission MIN-2 et le troisième minimum de transmission MIN-3 sont écartés d'environ 45nm.

En particulier, dans le cas de la figure 5, le deuxième minimum MIN-2 est situé vers 585nm et le troisième minimum MIN-3 est localisé à 630nm, ils sont donc écartés de 45nm.

Les lentilles 1 selon l'invention permettent donc d'obtenir des lunettes de soleil qui permettent d'écarter la gamme spectrale bleue nocive pour la rétine tout en améliorant la perception des couleurs et volumes dans les situations potentiellement éblouissantes.

Le tableau suivant reprend les données des graphiques des figures 2 à 5 sous forme numérique

| Lamda (nm) | Fig. 2 Transmission (%) | Fig. 3 Transmission (%) | Fig. 4 Transmission (%) | Fig. 5 Transmission (%) |
|---|---|---|---|---|
| 380 | 0,00 | 0,02 | 0,01 | 0,01 |
| 385 | - 0,01 | 0,00 | 0,00 | - 0,01 |
| 390 | 0,14 | 0,02 | 0,18 | - |
| 395 | 2,59 | - 0,01 | 2,22 | 0,02 |
| 400 | 10,15 | 0,15 | 8,51 | 0,50 |
| 405 | 17,55 | 2,14 | 15,58 | 3,18 |
| 410 | 21,03 | 6,97 | 18,79 | 7,54 |
| 415 | 22,15 | 12,54 | 20,23 | 10,96 |
| 420 | 18,27 | 14,89 | 18,22 | 11,91 |
| 425 | 8,61 | 10,93 | 11,23 | 8,46 |
| 430 | 2,21 | 5,30 | 4,59 | 3,78 |
| 435 | 1,84 | 4,98 | 4,46 | 3,73 |
| 440 | 7,13 | 10,24 | 11,01 | 9,14 |
| 445 | 17,93 | 17,30 | 20,66 | 16,98 |
| 450 | 24,44 | 20,30 | 25,71 | 21,60 |
| 455 | 26,09 | 20,37 | 27,00 | 23,68 |
| 460 | 25,47 | 18,87 | 25,99 | 24,30 |
| 465 | 24,46 | 17,85 | 25,95 | 24,73 |
| 470 | 24,36 | 17,70 | 26,30 | 25,57 |
| 475 | 22,88 | 16,53 | 24,99 | 25,46 |
| 480 | 20,42 | 15,55 | 23,47 | 24,20 |
| 485 | 18,88 | 14,60 | 22,61 | 24,14 |
| 490 | 15,07 | 11,81 | 19,15 | 21,33 |
| 495 | 14,41 | 10,92 | 18,94 | 21,04 |
| 500 | 13,05 | 10,15 | 17,45 | 19,55 |
| 505 | 13,14 | 11,63 | 16,88 | 19,76 |
| 510 | 11,24 | 13,69 | 15,58 | 17,68 |
| 515 | 9,11 | 15,74 | 13,16 | 15,82 |
| 520 | 7,38 | 18,52 | 11,50 | 14,11 |
| 525 | 5,20 | 17,97 | 9,10 | 11,13 |
| 530 | 4,85 | 17,17 | 8,27 | 10,51 |
| 535 | 5,69 | 15,89 | 8,59 | 10,81 |

(suite)

| Lamda (nm) | Fig. 2 Transmission (%) | Fig. 3 Transmission (%) | Fig. 4 Transmission (%) | Fig. 5 Transmission (%) |
|---|---|---|---|---|
| 540 | 8,54 | 17,15 | 11,18 | 12,75 |
| Lamda (nm) | Fig. 2 | Fig. 3 | Fig. 4 | Fig. 5 |
|  | Transmission (%) | Transmission (%) | Transmission (%) | Transmission (%) |
| 545 | 11,97 | 16,59 | 13,27 | 14,22 |
| 550 | 13,38 | 14,43 | 13,54 | 13,88 |
| 555 | 15,39 | 14,36 | 14,08 | 14,71 |
| 560 | 16,26 | 13,59 | 13,97 | 14,79 |
| 565 | 17,61 | 14,12 | 14,55 | 15,12 |
| 570 | 15,90 | 12,50 | 12,98 | 13,59 |
| 575 | 12,21 | 10,47 | 10,72 | 10,71 |
| 580 | 6,53 | 6,84 | 6,89 | 6,67 |
| 585 | 4,20 | 5,20 | 5,18 | 4,60 |
| 590 | 5,75 | 6,20 | 6,17 | 5,57 |
| 595 | 10,97 | 9,32 | 9,48 | 8,52 |
| 600 | 17,37 | 12,34 | 12,55 | 11,59 |
| 605 | 21,99 | 14,79 | 14,99 | 13,54 |
| 610 | 22,93 | 14,67 | 14,87 | 13,81 |
| 615 | 21,87 | 13,97 | 14,24 | 13,48 |
| 620 | 17,09 | 11,64 | 11,75 | 11,43 |
| 625 | 12,98 | 9,75 | 9,69 | 9,66 |
| 630 | 12,12 | 9,07 | 9,11 | 9,09 |
| 635 | 17,19 | 11,49 | 11,56 | 11,37 |
| 640 | 23,63 | 14,64 | 14,93 | 14,01 |
| 645 | 27,91 | 16,54 | 16,99 | 15,60 |
| 650 | 30,30 | 19,45 | 20,07 | 17,05 |
| 655 | 29,69 | 21,55 | 22,47 | 16,79 |
| 660 | 34,10 | 26,40 | 27,54 | 19,96 |
| 665 | 36,33 | 29,51 | 31,31 | 22,25 |
| 670 | 34,58 | 28,37 | 30,11 | 22,81 |
| 675 | 35,80 | 31,02 | 32,86 | 24,80 |
| 680 | 38,34 | 35,39 | 37,83 | 27,28 |
| 685 | 40,22 | 35,89 | 37,96 | 31,32 |
| 690 | 40,72 | 36,31 | 38,68 | 33,41 |
| 695 | 41,76 | 39,93 | 42,60 | 34,34 |
| 700 | 47,49 | 43,49 | 45,97 | 41,43 |
| 705 | 49,51 | 44,63 | 46,98 | 45,13 |
| 710 | 49,93 | 48,14 | 51,30 | 45,39 |
| 715 | 57,23 | 52,86 | 55,84 | 53,57 |
| 720 | 59,53 | 54,18 | 56,83 | 56,99 |

(suite)

| Lamda (nm) | Fig. 2 | Fig. 3 | Fig. 4 | Fig. 5 |
|---|---|---|---|---|
| | Transmission (%) | Transmission (%) | Transmission (%) | Transmission (%) |
| 725 | 61,72 | 58,76 | 63,06 | 58,76 |
| Lamda (nm) | Fig. 2 Transmission (%) | Fig. 3 Transmission (%) | Fig. 4 Transmission (%) | Fig. 5 Transmission (%) |
| 730 | 65,92 | 60,53 | 64,55 | 64,27 |
| 735 | 67,82 | 61,77 | 65,82 | 66,36 |
| 740 | 71,43 | 66,92 | 72,02 | 69,78 |
| 745 | 72,04 | 65,92 | 71,07 | 71,17 |
| 750 | 73,48 | 67,91 | 73,24 | 72,69 |
| 755 | 77,54 | 71,36 | 76,92 | 76,69 |
| 760 | 76,39 | 70,44 | 76,22 | 75,94 |
| 765 | 78,60 | 72,65 | 78,66 | 78,28 |
| 770 | 79,77 | 72,70 | 78,68 | 79,21 |
| 775 | 80,86 | 74,68 | 81,05 | 80,42 |
| 780 | 81,21 | 74,68 | 80,74 | 80,87 |

**Revendications**

1. Lentille ophtalmologique (1) pour lunettes de soleil comportant au moins un substrat (13), au moins un des substrats (13) comportant un ou plusieurs colorants et/ou pigments, lesdits colorants et/ou pigments de tous les substrats coopérant ensemble afin d'absorber la lumière traversant la lentille (1), la lentille (1) ayant un spectre de transmission tel que :

   • la transmission aux longueurs d'ondes inférieures à 380nm est inférieure à 1%, en particulier 0,03%,
   • le spectre comporte dans la gamme de longueurs d'ondes compris entre 390nm et 420nm un premier maximum de transmission (MAX-1) présentant une transmission supérieure à 8%,
   • le spectre comporte dans la gamme de longueurs d'ondes compris entre 426nm et 440nm un premier minimum de transmission (MIN-1) présentant une transmission inférieure ou égale à 10%, en particulier inférieure ou égale à 6%, la transmission du premier minimum (MIN-1) étant inférieure à la transmission du premier maximum (MAX-1),
   • la transmission dans la gamme de longueur d'ondes compris entre 450nm et 500nm présente une transmission supérieure à 10%, le spectre comporte dans la gamme de longueurs d'ondes comprises entre 570nm et 595nm un deuxième minimum de transmission (MIN-2) présentant une transmission inférieure à 10% de préférence inférieure à 6%,
   • le spectre comporte dans la gamme de longueurs d'ondes comprises entre 590nm et 620nm un deuxième maximum de transmission (MAX-2) présentant une transmission supérieure à 5% de préférence supérieure à 8%, la longueur d'onde correspondant au deuxième maximum de transmission (MAX-2) étant supérieure à celle du deuxième minimum de transmission (MIN-2) et la transmittance du deuxième maximum de transmission (MAX-2) étant supérieure à celle du deuxième minimum de transmission (MIN-2),le spectre comporte dans la gamme de longueurs d'ondes comprises entre 620nm et 640nm un troisième minimum de transmission (MIN-3) présentant une transmission inférieure à 15%, la transmittance du troisième minimum (MIN-3) étant inférieure à la transmittance du deuxième maximum (MAX-2),
   • la transmission aux longueurs d'ondes supérieures à 640nm est supérieure à 14%.

2. Lentille ophtalmologique selon la revendication 1, **caractérisée en ce que** le spectre comporte dans la gamme de longueurs d'ondes comprises entre 480nm et 550nm un quatrième minimum (MIN-4) de transmission présentant une transmission inférieure à 15 % en particulier inférieure à 11% de préférence 9 %.

3. Lentille selon la revendication 2, **caractérisée en ce que** le quatrième minimum de transmission (MIN-4) est localisé entre 490nm et 510nm.

4. Lentille selon la revendication 2, **caractérisée en ce que** le quatrième minimum (MIN-4) de transmission est localisé entre 520nm et 540nm.

5. Lentille selon l'une quelconque des revendications 1 à 4, **caractérisée en ce que** le spectre comporte dans la gamme de longueurs d'ondes comprises entre 440nm et 480nm un troisième maximum de transmission (MAX-3) présentant une transmission supérieure à 15% de préférence 20%, en particulier 25%.

6. Lentille selon l'une quelconque des revendications 1 à 5, **caractérisée en ce que** la transmission du troisième minimum de transmission (MIN-3) possède une transmission inférieure ou égale à 75%, en particulier 66%, de la valeur de transmission du deuxième maximum de transmission (MAX-2).

7. Lentille selon l'une quelconque des revendications 1 à 6, **caractérisée en ce que** la transmission du deuxième minimum de transmission (MIN-2) est inférieure à la transmission du troisième minimum de transmission (MIN-3).

8. Lentille selon l'une quelconque des revendications 1 à 7, **caractérisée en ce que** la transmission du premier minimum de transmission (MIN-1) est inférieure ou égale à la transmission du deuxième minimum de transmission (MIN-2).

9. Lentille selon l'une quelconque des revendications 2 à 8, **caractérisée en ce que** la transmission du quatrième minimum de transmission est supérieure à la transmission du premier et du deuxième minimum de transmission (MIN-1, MIN-2).

10. Lentille selon l'une quelconque des revendications 2 à 9, **caractérisée en ce que** le spectre comporte entre le quatrième minimum de transmission (MIN-4) et le deuxième minimum de transmission (MIN-2) un quatrième maximum (MAX-4) de transmission ayant une transmission comprise entre 10% et 60% notamment compris entre 10% et 25%.

11. Lentille selon l'une quelconque des revendications 1 à 10, **caractérisée en ce que** la largeur du pic d'absorption formé par le premier minimum de transmission (MIN-1) mesurée à une valeur de transmission correspondant au double de la valeur de transmission du premier minimum de transmission (MIN-1) est comprise entre 10nm et 20nm, de préférence autour de 15nm.

12. Lentille selon l'une quelconque des revendications 1 à 11, **caractérisée en ce que** la largeur du pic d'absorption formé par le deuxième minimum de transmission (MIN-2) à une valeur de transmission correspondant au double de la valeur de transmission du deuxième minimum de transmission est comprise entre 15nm et 30nm, de préférence autour de 20nm.

13. Lentille selon l'une quelconque des revendications 1 à 12, **caractérisée en ce que** le deuxième minimum de transmission (MIN-2) et le troisième minimum de transmission (MIN-3) sont écartés de 30nm à 60nm, en particulier de 45nm.

14. Lentille selon l'une quelconque des revendications 1 à 13, **caractérisée en ce que** la transmission entre 440nm et 480nm est supérieure à 20%.

15. Lentille selon l'une quelconque des revendications 1 à 14, **caractérisée en ce que** la transmission entre 480nm et 510nm est comprise entre 10% et 40%.

**Patentansprüche**

1. Ophthalmologische Linse (1) für eine Sonnenbrille, die mindestens ein Substrat (13) enthält, wobei mindestens eines der Substrate (13) einen oder mehrere Farbstoffe und/oder Pigmente enthält, wobei der Farbstoff und/oder die Pigmente aller Substrate zusammenwirken, um das durch die Linse (1) gehende Licht zu absorbieren, wobei die Linse (1) ein derartiges Transmissionsspektrum hat, dass:

   • die Transmission bei den Wellenlängen niedriger als 380nm niedriger als 1% ist, insbesondere 0,03%,

• das Spektrum im Wellenlängenbereich zwischen 390nm und 420nm ein erstes Transmissionsmaximum (MAX-1) enthält, das eine Transmission höher als 8% aufweist,

• das Spektrum im Wellenlängenbereich zwischen 426nm und 440nm ein erstes Transmissionsminimum (MIN-1) enthält, das eine Transmission niedriger als oder gleich 10% aufweist, insbesondere niedriger als oder gleich 6%, wobei die Transmission des ersten Minimums (MIN-1) niedriger ist als die Transmission des ersten Maximums (MAX-1),

• die Transmission im Wellenlängenbereich zwischen 450nm und 500nm eine Transmission höher als 10% aufweist, das Spektrum im Wellenlängenbereich zwischen 570nm und 595nm ein zweites Transmissionsminimum (MIN-2) enthält, das eine Transmission niedriger als 10% aufweist, vorzugsweise niedriger als 6%,

• das Spektrum im Wellenlängenbereich zwischen 590nm und 620nm ein zweites Transmissionsmaximum (MAX-2) enthält, das eine Transmission höher als 5%, vorzugsweise höher als 8% aufweist, wobei die dem zweiten Transmissionsmaximum (MAX-2) entsprechende Wellenlänge höher ist als diejenige des zweiten Transmissionsminimums (MIN-2), und der Transmissionsgrad des zweiten Transmissionsmaximums (MAX-2) höher ist als derjenige des zweiten Transmissionsminimums (MIN-2), das Spektrum im Wellenlängenbereich zwischen 620nm und 640nm ein drittes Transmissionsminimum (MIN-3) enthält, das eine Transmission niedriger als 15% aufweist, wobei der Transmissionsgrad des dritten Minimums (MIN-3) niedriger ist als der Transmissionsgrad des zweiten Maximums (MAX-2),

• die Transmission auf den Wellenlängen höher als 640nm höher ist als 14%.

2. Ophthalmologische Linse nach Anspruch 1, **dadurch gekennzeichnet, dass** das Spektrum im Wellenlängenbereich zwischen 480nm und 550nm ein viertes Transmissionsminimum (MIN-4) enthält, das eine Transmission niedriger als 15%, insbesondere niedriger als 11%, vorzugsweise von 9% aufweist.

3. Linse nach Anspruch 2, **dadurch gekennzeichnet, dass** das vierte Transmissionsminimum (MIN-4) sich zwischen 490nm und 510nm befindet.

4. Linse nach Anspruch 2, **dadurch gekennzeichnet, dass** das vierte Transmissionsminimum (MIN-4) sich zwischen 520nm und 540nm befindet.

5. Linse nach einem der Ansprüche 1 bis 4, **dadurch gekennzeichnet, dass** das Spektrum im Wellenlängenbereich zwischen 440nm und 480nm ein drittes Transmissionsmaximum (MAX-3) enthält, das eine Transmission höher als 15%, vorzugsweise 20%, insbesondere 25% aufweist.

6. Linse nach einem der Ansprüche 1 bis 5, **dadurch gekennzeichnet, dass** die Transmission des dritten Transmissionsminimums (MIN-3) eine Transmission niedriger als oder gleich 75%, insbesondere 66%, des Transmissionswerts des zweiten Transmissionsmaximums (MAX-2) besitzt.

7. Linse nach einem der Ansprüche 1 bis 6, **dadurch gekennzeichnet, dass** die Transmission des zweiten Transmissionsminimums (MIN-2) niedriger ist als die Transmission des dritten Transmissionsminimums (MIN-3).

8. Linse nach einem der Ansprüche 1 bis 7, **dadurch gekennzeichnet, dass** die Transmission des ersten Transmissionsminimums (MIN-1) niedriger als die oder gleich der Transmission des zweiten Transmissionsminimums (MIN-2) ist.

9. Linse nach einem der Ansprüche 2 bis 8, **dadurch gekennzeichnet, dass** die Transmission des vierten Transmissionsminimums höher ist als die Transmission des ersten und des zweiten Transmissionsminimums (MIN-1, MIN-2).

10. Linse nach einem der Ansprüche 2 bis 9, **dadurch gekennzeichnet, dass** das Spektrum zwischen dem vierten Transmissionsminimum (MIN-4) und dem zweiten Transmissionsminimum (MIN-2) ein viertes Transmissionsmaximum (MAX-4) enthält, das eine Transmission zwischen 10% und 60% hat, insbesondere zwischen 10% und 25%.

11. Linse nach einem der Ansprüche 1 bis 10, **dadurch gekennzeichnet, dass** die Breite der vom ersten Transmissionsminimum (MIN-1) gebildeten Absorptionsspitze, gemessen bei einem Transmissionswert entsprechend dem Doppelten des Transmissionswerts des ersten Transmissionsminimums (MIN-1), zwischen 10nm und 20nm, vorzugsweise um 15nm liegt.

12. Linse nach einem der Ansprüche 1 bis 11, **dadurch gekennzeichnet, dass** die Breite der vom zweiten Transmissionsminimum (MIN-2) gebildeten Absorptionsspitze bei einem Transmissionswert entsprechend dem Doppelten des Transmissionswerts des zweiten Transmissionsminimums zwischen 15nm und 30nm, vorzugsweise um 20nm liegt.

13. Linse nach einem der Ansprüche 1 bis 12, **dadurch gekennzeichnet, dass** das zweite Transmissionsminimum (MIN-2) und das dritte Transmissionsminimum (MIN-3) einen Abstand von 30nm bis 60nm, insbesondere von 45nm haben.

14. Linse nach einem der Ansprüche 1 bis 13, **dadurch gekennzeichnet, dass** die Transmission zwischen 440nm und 480nm höher ist als 20%.

15. Linse nach einem der Ansprüche 1 bis 14, **dadurch gekennzeichnet, dass** die Transmission zwischen 480nm und 510nm zwischen 10% und 40% liegt.

**Claims**

1. Ophthalmological lens (1) for sunglasses comprising at least one substrate (13), at least one of the substrates (13) comprising one or more colorants and/or pigments, said colorants and/or pigments of all the substrates interacting together in order to absorb the light passing through the lens (1), the lens (1) having a transmission spectrum such that:

   • the transmission at wavelengths lower than 380 nm is lower than 1%, in particular 0.03%,
   • the spectrum comprises in the wavelength range comprised between 390 nm and 420 nm a first transmission maximum (MAX-1) having a transmission higher than 8%,
   • the spectrum comprises in the wavelength range comprised between 426 nm and 440 nm a first transmission minimum (MIN-1) having a transmission lower than or equal to 10%, in particular lower than or equal to 6%, the transmission of the first minimum (MIN-1) being lower than the transmission of the first maximum (MAX-1),
   • the transmission in the wavelength range comprised between 450 nm and 500 nm has a transmission higher than 10%, the spectrum comprises in the wavelength range comprised between 570 nm and 595 nm a second transmission minimum (MIN-2) having a transmission lower than 10% and preferably lower than 6%,
   • the spectrum comprises in the wavelength range comprised between 590 nm and 620 nm a second transmission maximum (MAX-2) having a transmission higher than 5% and preferably higher than 8%, the wavelength corresponding to the second transmission maximum (MAX-2) being higher than that of the second transmission minimum (MIN-2) and the transmittance of the second transmission maximum (MAX-2) being higher than that of the second transmission minimum (MIN-2), the spectrum comprises in the wavelength range comprised between 620 nm and 640 nm a third transmission minimum (MIN-3) having a transmission lower than 15%, the transmittance of the third minimum (MIN-3) being lower than the transmittance of the second maximum (MAX-2),
   • the transmission at wavelengths higher than 640 nm is higher than 14%.

2. Ophthalmological lens according to Claim 1, **characterized in that** the spectrum comprises in the wavelength range comprised between 480 nm and 550 nm a fourth transmission minimum (MIN-4) having a transmission lower than 15%, in particular lower than 11%, and preferably 9%.

3. Lens according to Claim 2, **characterized in that** the fourth transmission minimum (MIN-4) is located between 490 nm and 510 nm.

4. Lens according to Claim 2, **characterized in that** the fourth transmission minimum (MIN-4) is located between 520 nm and 540 nm.

5. Lens according to any one of Claims 1 to 4, **characterized in that** the spectrum comprises in the wavelength range comprised between 440 nm and 480 nm a third transmission maximum (MAX-3) having a transmission higher than 15%, preferably 20%, in particular 25%.

6. Lens according to any one of Claims 1 to 5, **characterized in that** the transmission of the third transmission minimum (MIN-3) possesses a transmission lower than or equal to 75%, in particular 66%, of the transmission value of the second transmission maximum (MAX-2).

7. Lens according to any one of Claims 1 to 6, **characterized in that** the transmission of the second transmission minimum (MIN-2) is lower than the transmission of the third transmission minimum (MIN-3).

8.  Lens according to any one of Claims 1 to 7, **characterized in that** the transmission of the first transmission minimum (MIN-1) is lower than or equal to the transmission of the second transmission minimum (MIN-2).

9.  Lens according to any one of Claims 2 to 8, **characterized in that** the transmission of the fourth transmission minimum is higher than the transmission of the first and of the second transmission minimum (MIN-1, MIN-2).

10. Lens according to any one of Claims 2 to 9, **characterized in that** the spectrum comprises between the fourth transmission minimum (MIN-4) and the second transmission minimum (MIN-2) a fourth transmission maximum (MAX-4) having a transmission comprised between 10% and 60% and in particular comprised between 10% and 25%.

11. Lens according to any one of Claims 1 to 10, **characterized in that** the width of the absorption peak formed by the first transmission minimum (MIN-1) when measured at a transmission value corresponding to twice the transmission value of the first transmission minimum (MIN-1) is comprised between 10 nm and 20 nm and preferably is about 15 nm.

12. Lens according to any one of Claims 1 to 11, **characterized in that** the width of the absorption peak formed by the second transmission minimum (MIN-2) at a transmission value corresponding to twice the transmission value of the second transmission minimum is comprised between 15 nm and 30 nm and preferably is about 20 nm.

13. Lens according to any one of Claims 1 to 12, **characterized in that** the second transmission minimum (MIN-2) and the third transmission minimum (MIN-3) are separated by 30 nm to 60 nm and in particular by 45 nm.

14. Lens according to any one of Claims 1 to 13, **characterized in that** the transmission between 440 nm and 480 nm is higher than 20%.

15. Lens according to any one of Claims 1 to 14, **characterized in that** the transmission between 480 nm and 510 nm is comprised between 10% and 40%.

*FIG. 1*

*FIG. 2*

FIG. 3

EP 3 491 462 B1

*FIG. 4*

FIG.5

## RÉFÉRENCES CITÉES DANS LA DESCRIPTION

### Documents brevets cités dans la description

- US 2008221674 A1